# EUROPÄISCHE PATENTSCHRIFT

(11) **EP 1 106 904 B1**
(45) Veröffentlichungstag und Bekanntmachung des Hinweises auf die Patenterteilung: **28.09.2005**
(21) Anmeldenummer: 00122490.6
(22) Anmeldetag: 14.10.2000
(51) Int. Cl.: F17D 5/02

(54) **Verfahren und Vorrichtung zur Ermittlung von Druckverlusten**
Method and apparatus to locate pressure losses
Procédé et dispositif pour localiser des pertes de pression

(30) Priorität: 08.12.1999 DE 19959115
(43) Veröffentlichungstag der Anmeldung: 13.06.2001
(73) Patentinhaber: Innovatherm Prof. Dr. Leisenberg GmbH & Co. KG, 35510 Butzbach (DE)
(72) Erfinder: Uhrig, Wolfgang, 35321 Laubach (DE)
(74) Vertreter: Engelhardt, Guido

(56) Entgegenhaltungen:
- DE-A- 2 512 207
- DE-A- 19 529 362
- DE-C- 3 904 487
- GB-A- 2 319 634
- US-A- 5 568 825

## Beschreibung

Die Erfindung bezieht sich auf ein Verfahren sowie eine Vorrichtung zur Ermittlung von Druckverlusten in einer Druckleitung, insbesondere in einer einem Tunnelofen oder einem Anodenbrennofen zugeordneten Gas- oder Heizölleitung, an die ein oder mehrere Verbaucher angeschlossen sind, wobei das Medium unter Betriebsdruck in der Druckleitung während einer wählbaren Zeiteinheit eingesperrt wird und der eingesperrte Betriebsdruck auf einen Druckwächter einwirkt, mittels dem ein Druckabfall erkennbar ist.

Durch die DE-19 529 362 A1 sind ein derartiges Verfahren sowie eine Vorrichtung zur Anwendung dieses Verfahrens bekannt. Mittels des an die Druckleitung angeschlossenen Druckwächters ist zwar ein durch Leckage bedingter Druckabfall zuverlässig erkennbar, ein selbsttätiges Reagieren in Abhängigkeit von dem Betriebszustand des Druckwächters ist hierbei aber nicht vorgesehen. Das Abschalten einer Anlage kann somit nur zeitversetzt erfolgen, so daß auch nach dem Erkennen einer Leckstelle mitunter noch eine erhebliche Menge des Brennstoffes und somit eines gefährlichen Mediums austreten kann.

Aufgabe der Erfindung ist es daher, das Verfahren sowie die Vorrichtung der vorgenannten Gattung in der Weise zu verbessern, daß mit sehr geringem Schaltungsaufwand jederzeit oder in wählbaren Zeitabständen eine Überprüfung der Druckleitung erfolgen kann und daß in Abhängigkeit von dem Meßergebnis die Versorgung der Verbraucher wieder aufgenommen oder die Druckleitung stillgelegt wird. Der dazu erforderliche Bauaufwand soll gering gehalten werden, dennoch soll stets ein exaktes Meßergebnis zu erzielen sein.

Gemäß der Erfindung ist das Verfahren zur Ermittlung von Druckverlusten in einer Druckleitung dadurch gekennzeichnet, daß der an den Druckwächter angeschlossenen abgesperrten Druckleitung eine einstellbare Menge des zu verbrennenden Mediums in einer Zeiteinheit zugeführt wird, daß das Betriebsverhalten des Druckwächters während er Mediumzufuhr überwacht wird und daß in Abhängigkeit von dessen Betriebsstellung die Druckleitung freigeschaltet oder gesperrt wird.

Zweckmäßig ist es hierbei, vor der Zufuhr des Mediums in die Druckleitung deren Betriebsdruck mit Hilfe der Verbraucher bis auf den Schaltpunkt des Druckwächters abzusenken und die Zufuhr des Mediums in die Druckleitung mittels eines einem Absperrventil zugeordneten Zeitschalters einzustellen, wobei die Zeiteinheit, innerhalb der die Druckleitung abgesperrt ist, mittels eines oder mehrerer in diese eingesetzter und durch einen Zeitintervallschalter beeinflußbarer Absperrventile eingestellt wird.

Außerdem ist es angebracht, mittels des an die Druckleitung angeschlossenen Druckwächters einen Grenzwertschalter zu betätigen, durch den die den Verbrauchern zugeordneten ventile unmittelbar oder über einen Regler, entsprechend der Betriebsstellung des Druckwächters, beeinflußt werden.

Die Vorrichtung zur Anwendung dieses Verfahrens ist dadurch gekennzeichnet, daß der an den Druckwächter angeschlossenen abgesperrten Druckleitung über eine Zweigleitung in einer Zeiteinheit eine einstellbare Menge des zu verbrennenden Mediums zuführbar und der Druckwächter an einen Schaltkreis angeschlossen ist, mittels dem in Abhängigkeit von dem Betriebszustand des Druckwächters die Druckleitung durch Absenken des in dieser herrschenden Druckes bis zum Schaltpunkt des Druckwächters beeinflußbar ist.

Zur Zuführung des Mediums in die während einer durch einen Zeitintervallschalter wählbaren Zeiteinheit abgesperrte Druckleitung ist es vorteilhaft, das den Druckwächter benachbarte Absperrventil mit einer gesteuert zu öffnenden Bypaßleitung als Zweigleitung, die an die Druckleitung oder einer das Medium führenden Leitung angeschlossen ist, zu versehen, und die Bypaßleitung mittels eines Zeitschalters zu entsperren. Außerdem sollte der Druckwächter an einen Grenzwertschalter angeschlossen sein, mittels dem in Abhängigkeit von dem Betriebszustand des Druckwächters die Druckleitung freischaltbar oder absperrbar ist.

Wird eine Druckleitung nach dem erfindungsgemäßen Verfahren überprüft bzw. mit der vorschlagsgemäßen Vorrichtung zur Anwendung dieses Verfahrens ausgestattet, so ist es auf einfache Weise in kurzer Zeit möglich, einen Druckabfall in der Druckleitung festzustellen und entsprechend zu reagieren. Wird nämlich durch die bei abgesperrter Druckleitung vorzunehmende Zufuhr des Mediums in diese der Druckwächter, der mittels der Verbraucher auf seinen Schaltpunkt heruntergefahren ist, nicht wiederum über den Sollschaltpunkt angehoben, ist dies ein Indiez dafür, daß eine abnormale Leckage vorliegt, Undichtigkeiten an den Absperrventilen der Verbraucher und/oder Unregelmäßigkeiten in der Impulssteuerung gegeben sind. Der überprüfte Teil der Druckleitung ist in einem solchen Fall abzuschalten, wird dagegen keine Leckage oder keine anderweitige Störung festgestellt, kann sofort der Betrieb wieder aufgenommen werden. Mit geringem Aufwand kann somit in kurzer Zeit selbsttätig eine zuverlässige Überprüfung erfolgen, so daß eine hohe Sicherheit im Umgang mit brennbaren Medien gegeben ist.

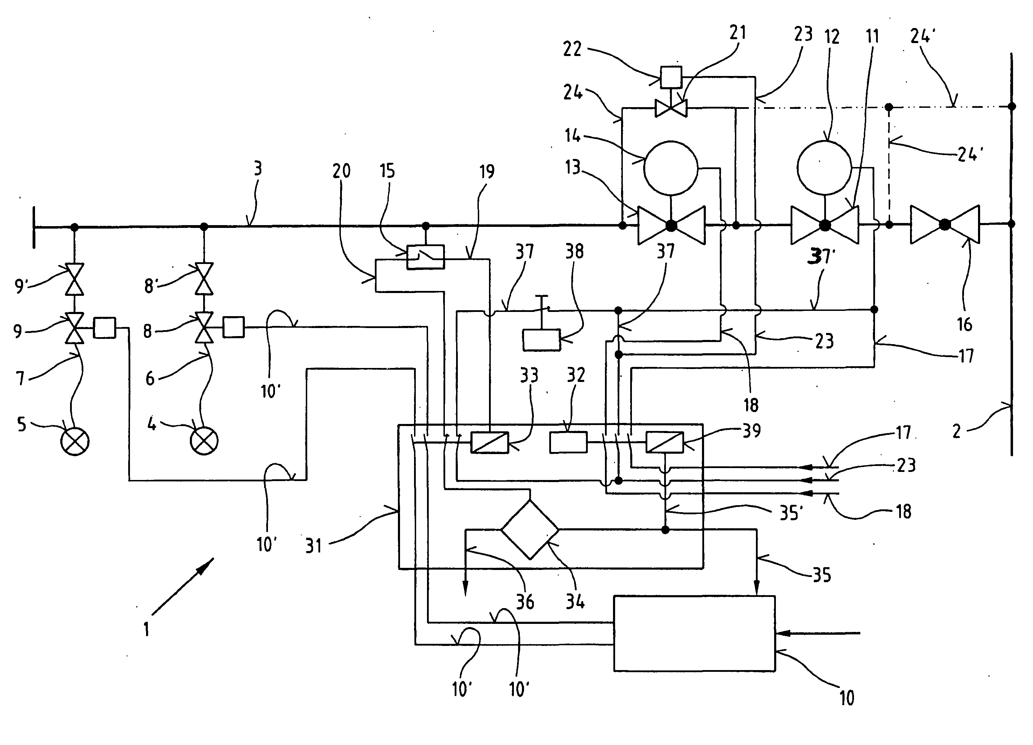

In der Zeichnung ist ein Ausführungsbeispiel einer Vorrichtung zur Ermittlung von Druckverlusten in einer Druckleitung dargestellt, das nachfolgend im einzelnen erläutert ist.

Die in der Zeichnung mit 1 bezeichnete Anlage besteht aus einer an eine Förderleitung 2, in der Gas oder Heizöl gefördert wird, angeschlossenen Druckleitung 3, mit der über Zweigleitungen 6 bzw. 7 Verbraucher 4 bzw. 5 verbunden sind. Mittels Schaltventilen 8 und 9, die über Leitungen 10' bzw. 10" an einen Regler 10 angeschlossen sind, ist der Brennstoff gegebenenfalls in Intervallen den Verbrauchern 4 und/oder 5 zuzuführen. In den Zweigleitungen 6 und 7 ist des weiteren jeweils ein von Hand betätigbares Absperrventil 8' bzw. 9', den Schaltventilen 8 und 9 vorgeschaltet, eingesetzt.

In die Druckleitung 3 sind zwei gesteuert schaltbare Absperrventile 11 und 13 eingebaut, denen Elektromagnete 12 bzw. 14 bzw. Elektromotore zugeordnet sind. Über Leitungen 17 und 18 sind die Elektromagnete 12 und 14 an einen Stromerzeuger angeschlossen. Außerdem ist dem Absperrventil 11 ein von Hand betätigbares weiteres Absperrventil 16 vorgeschaltet und dem Absperrventil 13 ist ein mit der Druckleitung 3 verbundener Druckwächter 15 nachgeschaltet.

Um mittels des Druckwächters 15 kontinuierlich Dichtheitsprüfungen der Druckleitung 3 in dem Bereich zwischen dem Absperrventil 13 und den den Verbrauchern 4 und 5 zugeordneten Schaftventilen 8 und 9 durchführen zu können, ist ein Schaltkreis 31 vorgesehen, mittels dem die Absperrventile 11 und 13 sowie ein in eine Bypaßleitung 24 als Zweigleitung eingesetztes Schaltventil 21 gesteuert werden können. Über eine Leitung 23 ist der Elektromagnet 22 bzw. der Elektromotor des Schaltventils 21 ansteuerbar, über Leitungen 19 bzw. 20 ist der Druckwächter 15 mit einem Relais 33 bzw. einem Grenzwertschalter 34 verbunden, die in den Schaltkreis 31 integriert sind. Über Signalleitungen 35, 35' bzw. 36 ist der Grenzwertschalter 34 an den Regler 10 und ein dem Zeitintervallschalter 32 zugeordnetes Wiedereinschaltgerät 39 bzw. an eine nicht dargestellte Alarmeinrichtung angeschlossen. Des weiteren ist in einer Zweigleitung 37 ein Zeitschalter 38 eingesetzt, mittels dem durch den Zeitintervallschalter 32 in den Leitungen 18 und 23 eingesetzten Kontakte beeinflußbar sind, überbrückt werden können.

Die Dichtheitsprüfung erfolgt mittels des Zeitintervallschalters 32 während einer Zeitdauer von ca. 2 bis 3 Sekunden in der Weise, daß bei geschlossenen Absperrventilen 11 und 13 durch Zufuhr von Brennstoff zu den Verbrauchern 4 und/oder 5 der Druck in der Druckleitung 3 bis zum Schaltpunkt des Druckwächters 15 heruntergefahren wird. Die Schaltventile 8 und 9 werden daraufhin geschlossen und mit Hilfe des Zeitschalters 38 werden das Absperrventil 11 sowie das Schaltventil 21 geöffnet, so daß über dieses eine geringe Menge des zu verbrennenden Mediums in die abgesperrte Druckleitung 3 eingebracht wird. Das zuzuführende Medium kann dem zwischen dem geöffneten Absperrventil 11 und dem geschlossenen Absperrventil 13 verbindenden Teil der Druckleitung 3 entnommen werden, es ist aber auch möglich, die Leitung 24 über eine strichpunktiert eingezeichnete Leitung 24' an die Druckleitung 3 zwischen dem Absperrventil 11 und dem handbetätigten Absperrventil 16 oder unmittelbar an die Förderleitung 2 anzuschließen. In diesem Fall kann die Leitung 37', mit der die Leitung 37 mit der Leitung 17 verbunden ist, um das Absperrventil 11 öffnen zu können, entfallen.

Weist die Druckleitung 3 in dem Bereich zwischen dem Absperrventil 13 und den Verbrauchern 4 und 5 bzw. den diesen zugeordneten Schaltventilen 8 und 9 keine Leckstellen auf, so wird der Druck in der Druckleitung 3 innerhalb der vorgegebenen Zeiteinheit wiederum über den Sollschaltpunkt des Druckwächters 15 ansteigen und über den Grenzschalter 34 wird über die Signalleitung 35 der Betrieb freigegeben. Tritt jedoch in dem abgesperrten Teil der Druckleitung 3 eine größere Leckage und/oder die Schaltventile 8 bzw. 9 weisen Undichtigkeiten am Ventilsitz auf, oder es liegt eine Unregelmäßigkeit in der Impulssteuerung vor, so wird der Druckwächter 15 in der Vorgabezeit den vorgegebenen Solldruck nicht erreichen. Über den Grenzwertschalter 34 und die Signalleitung 36 wird in diesem Fall Alarm ausgelöst und die Absperrventile 11 und 13 werden nicht freigeschaltet.

Mit Hilfe des Schaltkreises 31 und den mit diesem verbundenen Aggregaten ist somit eine kontinuierliche Dichtheitsprüfung vorzunehmen und es kann sofort in entsprechender Weise reagiert werden, ohne daß bei der Dichtheitsprüfung die Versorgung der Verbraucher 4 und 5 mit Brennstoff über einen längeren Zeitraum unterbrochen werden muß.

## Patentansprüche

1. Verfahren zur Ermittlung von Druckverlusten in einer Druckleitung (3), insbesondere in einer einem Tunnelofen oder einem Anodenbrennofen zugeordneten Gas- oder Heizölleitung, an die ein oder mehrere Verbaucher (4, 5) angeschlossen sind, wobei das Medium unter Betriebsdruck in der Druckleitung (3) während einer wählbaren Zeiteinheit eingesperrt wird und der eingesperrte Betriebsdruck auf einen Druckwächter (15) einwirkt, mittels dem ein Druckabfall erkennbar ist,
**dadurch gekennzeichnet,**
**daß** der an den Druckwächter (15) angeschlossenen abgesperrten Druckleitung (3) eine einstellbare Menge des zu verbrennenden Mediums in einer Zeiteinheit zugeführt wird, daß das Betriebsverhalten des Druckwächters (15) während der Mediumzufuhr überwacht wird und daß in Abhängigkeit von dessen Betriebsstellung die Druckleitung (3) freigeschaltet oder gesperrt wird.

2. Verfahren nach Anspruch 1,
**dadurch gekennzeichnet,**
**daß** vor der Zufuhr des Mediums in die Druckleitung (3) deren Betriebsdruck mit Hilfe der Verbraucher (4, 5) bis auf den Schaltpunkt des Druckwächters (15) abgesenkt wird.

3. Verfahren nach Anspruch 1 oder 2,
**dadurch gekennzeichnet,**
**daß** die Zufuhr des Mediums in die Druckleitung (3) mittels eines einem Absperrventil (11) zugeordneten Zeitschalters (38) eingestellt wird.

4. Verfahren nach Anspruch 1 bis 3,
**dadurch gekennzeichnet,**
**daß** die Zeiteinheit, innerhalb der die Druckleitung (3) abgesperrt ist, mittels eines oder mehrerer in diese eingesetzter und durch einen Zeitintervallschalter (32) beeinflußbarer Absperrventile (11, 13) eingestellt wird.

5. Verfahren nach Anspruch 1 bis 4,
**dadurch gekennzeichnet ,**
**daß** mittels dem an die Druckleitung (3) angeschlossenen Druckwächters (15) ein Grenzwertschalter (34) betätigt wird, mittels dem die den Verbrauchern (4,5) zugeordneten Schaftventile (8, 9) unmittelbar oder über einen Regler (10), entsprechend der Betriebsstellung des Druckwächters (15), beeinflußt werden.

6. Vorrichtung zur Ermittlung von Druckverlusten in einer Druckleitung (3), insbesondere in einer einem Tunnelofen oder einem Anodenbrennofen zugeordneten Gas- oder Heizölleitung, die mittels eines oder mehrerer gesteuert betätigbarer Absperrventile (11, 13) während einer wählbaren Zeiteinheit absperrbar, an einem oder mehrere Verbraucher (4,5) angeschlossen und die mit einem Druckwächter (15) versehen ist,
**dadurch gekennzeichnet,**
**daß** der an den Druckwächter (15) angeschlossenen abgesperrten Druckleitung (3) über eine Zweigleitung (24) in einer Zeiteinheit eine einstellbare Menge des zu verbrennenden Mediums zuführbar und der Druckwächter (15) an einen Schaltkreis (31) angeschlossen ist, mittels dem in Abhängigkeit von dem Betriebszustand des Druckwächters (15) die Druckleitung (3) durch Absenken des in dieser herrschenden Druckes bis zum Schaltpunkt des Druckwächters (15) beeinflußbar ist.

7. Vorrichtung nach Anspruch 6,
**dadurch gekennzeichnet,**
**daß** zur Zuführung des Mediums in die während einer durch einen Zeitintervallschalter (32) wählbaren Zeiteinheit abgesperrte Druckleitung (3) das den Druckwächter (15) benachbarte Absperrventil (13) mit einer gesteuert zu öffnenden Bypaßleitung als Zweigleitung (24, 24'), die an die Druckleitung oder an eine das Medium führenden Förderleitung (2) angeschlossen ist, versehen ist.

8. Vorrichtung nach Anspruch 7,
**dadurch gekennzeichnet,**
**daß** die Bypaßleitung (24) mittels eines Zeitschalters (38) entsperrbar ist.

9. Vorrichtung nach Anspruch 6 bis 8,
**dadurch gekennzeichnet,**
**daß** der Druckwächter (15) an einen Grenzwertschalter (34) angeschlossen ist, mittels dem in Abhängigkeit von dem Betriebszustand des Druckwächters (15) die Druckleitung (3) freischaltbar oder absperrbar ist.

## Claims

1. A method to locate pressure losses in a pressure line (3), in particular in a gas or heating oil line assigned to a tunnel furnace or an anode furnace to which one or more consumers (4, 5) are connected, in which the medium at operating pressure is blocked within the pressure line (3) during a selectable time unit and the blocked-in operating pressure acts on a pressure monitor (15) by means of which a pressure drop can be detected,
**characterised in that**,
the blocked pressure line (3) connected to the pressure monitor (15) can have an adjustable quantity of the medium to be combusted supplied to it within a time unit, that the operating behaviour of the pressure monitor (15) is monitored during the supply of medium and that the pressure line (3) is released or blocked depending on its operating position.

2. The method in accordance with Claim 1,
**characterised in that**
before the medium is supplied into the pressure line (3), the operating pressure of the pressure line (3) is reduced with the help of the consumers (4, 5) until the switching point of the pressure monitor (15) is reached.

3. The method in accordance with Claim 1 or 2,
**characterised in that**
the supply of medium into the pressure line (3) is set by means of a timer switch (38) assigned to a shut-off valve (11).

4. The method in accordance with Claims 1 to 3,
**characterised in that**
the time unit within which the pressure line (3) is blocked is set by means of one or more shut-off valves (11, 13) inserted in the pressure line (3) and which can be influenced by a time interval switch (32).

5. The method in accordance with Claims 1 to 4,
**characterised in that**
a limit value switch (34) is actuated by means of the pressure monitor (15) connected to the pressure line (3), by means of which switch (34) the stem valves (8, 9) assigned to the consumers (4, 5) are influenced directly or via a controller (10) according to the operating position of the pressure monitor (15).

6. An apparatus to locate pressure losses in a pressure line (3), in particular in a gas or heating oil line allocated to a tunnel furnace or an anode furnace, that can be blocked for a selectable time unit by means of one or more shut-off valves (11, 13) with controlled actuation, is connected to one or more consumers (4, 5) and is provided with a pressure monitor (15),
**characterised in that**
the shut-off pressure line (3) connected to the pressure monitor (15) can have an adjustable quantity of the medium to be combusted supplied to it through a branch line (24) within a time unit and the pressure monitor (15) is connected to a circuit (31) by means of which the pressure line (3) can be influenced depending on the operating status of the pressure monitor (15) by reducing the pressure in the pressure line (3) until the switching point of the pressure monitor (15).

7. The apparatus in accordance with Claim 6,
**characterised in that,**
in order to supply the medium into a pressure line (3) blocked during a time unit that can be selected on the timer interval switch (32), the shut-off valve (13) adjacent to the pressure monitor (15) is provided with a bypass line as a branch line (24, 24') that is opened subject to control and is connected to the pressure line or a pump line (2) carrying the medium.

8. The apparatus in accordance with Claim 7,
**characterised in that**,
the bypass line (24) can be unblocked by means of a timer switch (38).

9. The apparatus in accordance with Claims 6 to 8,
**characterised in that**,
the pressure monitor (15) is connected to a limit value switch (34), by means of which the pressure line (3) can be released or blocked depending on the operating status of the pressure monitor (15).

## Revendications

1. Procédé pour localiser des pertes de pression dans une conduite de pression (3), en particulier une conduite à gaz ou à mazout assignée à un four à canal ou à un four à anodes, à laquelle sont raccordés un ou plusieurs consommateurs (4, 5), le milieu sous pression étant enfermé pendant une période de temps réglable dans la conduite sous pression (3), et où la pression de service établie agit sur un manocontacteur (15) qui permet d'identifier une perte de pression,
**caractérisé en ce que**,
vers la conduite de pression (3) fermée et raccordée au manocontacteur (15), il est dirigé pendant une unité de temps une quantité réglable du milieu à brûler, que le comportement en service du manocontacteur (15) est surveillé durant l'apport de milieu et que, en dépendance de sa position de service, la conduite de pression (3) est ouverte ou fermée.

2. Procédé d'après la revendication 1,
**caractérisé en ce que**,
avant l'apport du milieu dans la conduite de pression (3), la pression de celle-ci est ramenée au moyen des consommateurs (4, 5) jusqu'au seuil de réponse du manocontacteur (15).

3. Procédé d'après la revendication 1 ou 2,
**caractérisé en ce que**
l'apport du milieu dans la conduite de pression (3) est réglé au moyen d'une minuterie (38) attribuée à un robinet d'arrêt (11).

4. Procédé d'après la revendication 1 à 3,
**caractérisé en ce que**
l'unité de temps durant laquelle la conduite de pression (3) est fermée, est réglée au moyen d'un ou de plusieurs robinets d'arrêt (11, 13) prévues dans celle-ci et soumises à l'action d'un contacteur à intervalles (32).

5. Procédé d'après la revendication 1 à 4,
**caractérisé en ce que**,
moyennant le manocontacteur (15) raccordé à la conduite de pression (3), il est actionné un interrupteur de fin de course (34) au moyen duquel les soupapes (8, 9) assignées aux consommateurs (4, 5) sont actionnées en fonction de la position de service du manocontacteur (15), soit directement, soit par l'intermédiaire d'un régulateur (19).

6. Procédé pour localiser des pertes de pression dans une conduite de pression (3), en particulier une conduite à gaz ou à mazout assignée à un four à canal ou à un four à anodes, qui se laisse fermer durant une unité de temps réglable au moyen d'un ou de plusieurs robinets d'arrêt actionnés (11, 13), qui est raccordée à un ou à plusieurs consommateurs (4, 5) et qui est équipée d'un manocontacteur (15),
**caractérisé en ce que**,
vers la conduite de pression (3) fermée et raccordée au manocontacteur (15), il peut être amené via une conduite en dérivation (15), durant une unité de temps, une quantité réglable du milieu à brûler, et que le manocontacteur (15) est branché sur un circuit de commutation (31) au moyen duquel la conduite de pression (3) se laisse influer en dépendance de la position de service du manocontacteur (15) en vue de la baisse de pression dans celle-ci jusqu'à l'atteinte du seuil de réponse du manocontacteur (15).

7. Procédé d'après la revendication 6,
**caractérisé en ce que**
pour l'apport du milieu dans la conduite de pression (3) fermée par un contacteur à intervalles (32) durant une unité de temps réglable, le robinet d'arrêt (13) avoisinant le manocontacteur (15) est équipé d'une conduite en dérivation (24, 24') à ouverture réglable, raccordée à la conduite de pression ou à une conduite (2) pour le refoulement du milieu.

8. Procédé d'après la revendication 7,
**caractérisé en ce que**
la conduite en dérivation (24) se laisse déverrouiller au moyen d'une minuterie (38).

9. Procédé d'après la revendication 6 à 8,
**caractérisé en ce que**
le manocontacteur (15) est raccordé à un interrupteur de fin de course (34) au moyen duquel la conduite de pression (3) se laisse ouvrir ou fermer en dépendance de la position de service du manocontacteur (15).
